# EUROPEAN PATENT APPLICATION

(11) **EP 1 146 096 A1**
(43) Date of publication of application: **17.10.2001**
(21) Application number: 00201309.2
(22) Date of filing: 12.04.2000
(51) Int. Cl.: C09D 11/10

(54) **Printing ink compositions**

(71) Applicant: Akzo Nobel N.V., 6824 BM Arnhem (NL)
(72) Inventor: Mestach, Dirk Emiel Paula, 2560 Nijlen (BE)
(74) Representative: Schalkwijk, Pieter Cornelis, c.s.

(57) **Abstract**

The invention pertains to a printing ink composition comprising 40-90 wt.% of an alkyd resin which is obtainable by reacting a mixture comprising 25 to 90 wt.% fatty acid, 3 to 40 wt.% polyhydric alcohol, and 3-35 wt.% polyfunctional carboxylic acid or the anhydride thereof, characterized in that the fatty acid is a mixture of saturated and unsaturated fatty acids, the ratio of saturated fatty acid : unsaturated fatty acid being 1.5:1 to 5 : 1.

## Description

The invention pertains to a printing ink composition composed of an alkyd resin and to the use of said composition in printing ink.

Printing ink compositions composed of alkyd resins are known in the art. In US 3,847,850 printing inks with modified alkyd resins are disclosed. The alkyd resin binders of these printing inks contain at least 60 wt.% of fatty acids with 12 to 24 carbon atoms in the form of a drying oil. Examples include vegetable oils such as linseed oil, cottonseed oil, soybean oil, tobacco oil, safflower oil, or modifications thereof. Soybean oil modified alkyd resins for printing inks are also disclosed in US 5,569,701.
US 4,383,860 discloses a printing ink composed of an alkyd resin binder modified with a long-chain fatty acid. The fatty acids should be free or substantially free of double bonds and at least have an iodine number less than 20.

Although these known printing inks are very suitable in view of their rheological properties, ease of cleaning, drying stability, resistance, and film-forming properties, they suffer from a serious drawback with regard to their stability towards yellowing. When conventional vegetable oil-containing alkyd based printing inks are used for lithographic printing on tin substrates, yellowing occurs during the multiple passes through the drying oven, posing a major problem. In alkyd based coating compositions the yellowing is believed to be a result of the formation of conjugated structures during the oxidative drying process. It is believed that this effect is enhanced at elevated temperatures.

Several methods have been proposed to reduce the yellowing of alkyd resin based compositions. In general, it is advised to reduce the proportion of unsaturated linolenic acid in the oil or the fatty acid used in the alkyd preparation. To ensure good surface drying properties, the proportions of linoleic acid and oleic acid are increased. Typical fatty acids used to obtain alkyd resins with reduced yellowing are soybean and sunflower fatty acids.
In order to overcome the problem of yellowing, alkyd resins free of unsaturated fatty acids have been proposed, such as in US 4,383,860. This patent discloses non-yellowing printing inks in which non-drying alkyd resins are used that are modified with oils or fatty acids having an iodine value less than 20. However, for tin printing applications non-drying alkyd resins cannot be used without additional cross-linkers, because otherwise the inks would lack the desirable mechanical properties needed for tin printing, such as surface drying, scratch and abrasion resistance, and resistance to sterilization.

It is therefore an object of the present invention to provide a drying ink composition that is substantially free from yellowing problems. This object is attained with a printing ink composition comprising 40-90 wt.% of an alkyd resin which is obtainable by reacting a mixture comprising 25 to 90 wt.% fatty acid, 3 to 40 wt.% polyhydric alcohol, and 3-35 wt.% polyfunctional carboxylic acid or the anhydride thereof, characterized in that the fatty acid is a mixture of saturated and unsaturated fatty acids, the ratio saturated fatty acid : unsaturated fatty acid being 1.5:1 to 5 : 1.

Surprisingly, it was found that these printing ink compositions containing alkyd resins obtained from a mixture of saturated and unsaturated fatty acids have good drying properties without showing substantial yellowing. Preferably, the printing ink compositions comprise alkyd resins wherein the alkyd resin is obtainable from a mixture of fatty acids wherein > 50 wt.%, and preferably > 90 wt.% of the saturated fatty acid is a branched fatty acid.

The printing ink composition should comprise an additional binder. Preferably, the printing ink composition comprises an amino-aldehyde resin as curing agent. The invention further pertains to the use of the presently claimed printing ink compositions for making a printing ink.

The printing ink composition of this invention comprises an alkyd resin and, preferably, a melamine-formaldehyde resin as binders, pigments, and a combination of mineral and vegetable oils. This composition can further comprise minor amounts of auxiliary substances such as catalysts or metal driers.

Alkyd resins suitable for use in printing ink compositions should contain appropriate amounts of fatty acids, polyhydric alcohols, and polyfunctional carboxylic acid or anhydrides thereof. The methods used to calculate these appropriate amounts are known to those skilled in the art and have been published by several authors (e.g. Patton).

The fatty acids of the present invention are composed of a mixture of fatty acids derived from vegetable oils and synthetic fatty acids. Surprisingly, it was found that yellowing is minimal when an alkyd resin is used that contains a ratio of saturated : unsaturated fatty acid of 1.5 : 1 to 5 : 1, this contrary to the common belief that the alkyd resin should contain completely saturated fatty acids. Furthermore, it was found that the best results for non-yellowing are obtained when the major part of the saturated fatty acid fraction is branched.

The overall composition (in wt.%) of a preferred fatty acid mixture is:

| | |
|---|---|
| linolenic | 0.2-0.3, more preferably 0.25-0.27 |
| linoleic | 6.0-7.6, more preferably 6.42-7.10 |
| oleic | 3.0-4.5, more preferably 3.58-3.96 |
| saturated linear | 1.9-2.6, more preferably 2.10-2.32 |
| saturated branched | 24.0-35.0, more preferably 27.55-30.45 |

The saturated fatty acids preferably have a mean of 12 to 24 carbon atoms. Examples of fatty acids with varying degrees of unsaturation include linseed oil fatty acid, cottonseed oil fatty acid, soybean oil fatty acid, safflower oil fatty acid, sunflower oil fatty acid, tall oil fatty acid, coconut oil fatty acid, palm kernel oil fatty acid, and the like, and mixtures thereof.

The saturated fatty acids preferably are synthetic fatty acids having 8-24 carbon atoms. These fatty acids can be branched or linear. Preferably, mixtures of branched and linear fatty acids are used. Examples of unsaturated fatty acids suitable for use in the present invention are hexanoic acid, isooctanoic acid, isononanoic acid, lauric acid, myristic acid, palmetic acid, stearic acid, and the like. Examples of branched synthetic fatty acids are pivalic acid, α-methylbutyric acid, isovaleric acid, 2-ethylhexanoic acid, neodecanoic acid, mixtures of isomeric 10-carbon saturated monocarboxylic acids (Versatic® 10 acid, ex Shell Chemicals). For a complete survey of suitable fatty acids, both saturated and unsaturated, reference is made to Encyclopedia of Chemical Technology, R. E. Kirk and D.F. Othmer, Eds., Vol. 6, pp. 172-299, (1951).

The polyhydric alcohols of the alkyd resin are the ones commonly used in alkyd resins. These polyhydric alcohols usually have 1 to 24, preferably 1 to 8 carbon atoms, such as propanediol, ethyleneglycol, neopentylglycol, 1,2-hexanediol, 1,5-hexanediol, 1,6-hexanediol, glycerol, trimethylolethane, trimethylolpropane, pentaerythritol, dipentaerythritol, and the like, or mixtures thereof.

The polyfunctional carboxylic acid or anhydrides thereof preferably have 3 to 24 carbon atoms. Examples are phthalic acid, isophthalic acid, terephthalic acid, tetrahydrophthalic acid, hexahydrophthalic acid, succinic acid, maleic acid, fumaric acid, itaconic acid, citraconic acid, aconitic acid, mesaconic acid, trimellitic acid, pyromellitic acid, citric acid, and the anhydrides thereof, or mixtures thereof.

Optionally, the alkyd resin may be modified with mono-functional carboxylic acids other than the fatty acids described above in order to control the molecular weight, as is common in the production of alkyd resins. Mono-functional carboxylic acids commonly used in alkyd resin synthesis are benzoic acid and para-tert-butyl benzoic acid.

The additional binder preferably is an aminoaldehyde resin. Examples of aminoaldehyde resins are urea-aldehyde, benzoguanamine aldehyde, or melamine-aldehyde condensation products, and the like. Typically, these cross-linking curing agents are the products of reactions of melamine or urea with formaldehyde and various alcohols containing up to and including 4 carbon atoms. Particularly preferred cross-linking agents are alkylated melamine-formaldehyde resins. Particularly desired are melamine-formaldehyde condensation products, such as polymethoxymethyl melamines and, preferably, hexamethoxymethyl melamine. Other preferred binders are polymethoxybutyl melamines, preferably with a high degree of butylation. The preferred alkylated melamine formaldehyde resins are commercially available, for example from Solutia under the trademark Resimene™, from Akzo Nobel Resins under the trademark Setamine™, or from Cytec Industries under the trademark Cymel™.
Optionally, an acid catalyst, such as paratoluene sulfonic acid, dinonylnaphthalene disulfonic acid, dinonylnaphthalene monosulfonic acid, or dodecylbenzene sulfonic acid, may be employed to increase the curing rate of the melamine-formaldehyde or urea-formaldehyde curing agents with the alkyd resin.

The composition further may contain pigments. These include titanium dioxide, ferric oxide, calcium oxide, zinc oxide, antimony oxide, zinc chromate, carbon black, and the like, or mixtures thereof. Specifically preferred pigments are Cl Pigment Yellow 12, Cl Pigment Yellow 42, Cl Pigment Black 7, Cl Pigment Black 11, Cl Pigment Red 9, Cl Pigment Red 23, Cl Pigment Red 146, Cl Pigment Red 224, Cl Pigment Green 7, Cl Pigment Green 36, Cl Pigment Blue 15:3, Cl Pigment Violet 23, Cl Pigment Violet 32, and the like.

The composition may further contain driers, solvents and/or vegetable or mineral oils, as is common in printing inks.
Examples of driers are metal salts of aliphatic acids including cycloaliphatic acids, such as octanoic acid and naphthenic acid, where the metal is, for example, cobalt, manganese, lead, zirconium, calcium, zinc, and rare earth metals. Typically, mixtures of driers are used. Preferred metal salts are salts of cerium, cobalt, zirconium, and calcium, and mixtures thereof. The driers (calculated as metal) are usually applied in an amount of 0.001 to 3 wt.%, calculated on the alkyd resin solids content.
The vegetable oils, if used, must be of the semi-drying type and must contain low amounts of linolenic fatty acids (typically below 10%). Examples of vegetable oils are safflower oil, sunflower seed oil, dehydrated castor oil, and soybean oil.

Preferred mineral oils are those having a boiling range from 240 to 270°C, 260 to 290°C, or 280 to 320°C. Optionally, other organic solvents may be used in combination with the mineral oil to optimize the print properties.

The invention is further illustrated by the following examples.

### Example 1

In a polycondensation reactor equipped with an agitator and a Dean-Stark trap filled with xylene, 13 parts of sunflower fatty acid (Nouracid™ HE30, ex Akzo Nobel), 29 parts of a C18 branched saturated fatty acid (UCN™ 96.319, ex Unichema), and 20 parts of monopentaerythritol were heated to 230°C. The batch was reacted and water was removed by means of azeotropic distillation until an acid value of 2 was obtained. The batch was cooled to 170°C and 22 parts of phthalic acid anhydride and a second portion of 17 parts of sunflower fatty acid were added. The batch was heated to 250°C and reacted until the reaction mixture had an acid value of 3. The batch was then cooled and the xylene was removed under reduced pressure.

### Comparative Examples 1-3

Alkyd resins were prepared using the apparatus and the procedure given in Example 1, but using the ingredients as given (in wt.%) in Table 1.

**Table 1**

| Example | C-1 | C-2 | C-3 |
|---|---|---|---|
| sunflower fatty acid | 41 | | |
| stearic fatty acid | | | 12 |
| branched saturated fatty acid | | 41 | 30 |
| monopentaerytritol | 20 | 20 | 20 |
| phthalic acid anhydride | 21 | 21 | 21 |
| sunflower fatty acid | 18 | | |
| stearic fatty acid | | | 17 |
| branched saturated fatty acid | | 18 | |
| total | 100 | 100 | 100 |

In Comparative Example C-1 a fatty acid known for its good balance between drying properties and non-yellowing was used. In Comparative Examples C-2 and C-3 saturated fatty acids were used. In C-2 a branched fatty acid was used and in C-3 use was made of a blend of a linear and a branched fatty acid.

The alkyd resins were characterized and the values are given in Table 2.

**Table 2**

| | Example 1 | C-1 | C-2 | C-3 |
|---|---|---|---|---|
| viscosity at 75% non-volatile compounds in white spirit (Pa.s) | 8.2 | 6.5 | 4.3 | 12.0 |
| acid value (mg KOH/gr) | 2.8 | 3.0 | 4.7 | 3.0 |
| % non-volatile compounds | 99.3 | 100 | ±99 | 99.1 |
| appearance | clear | clear | clear | hazy |
| color (LICO 200) | 5.1 | 6.1 | 6.5 | 4.8 |

The alkyd resin of Example 1 and the alkyd resins of the comparative examples were formulated in white inks for tin printing using the ingredients given in Table 3.

**Table 3**

| component | parts |
|---|---|
| alkyd resin | 21 |
| mineral oil | 11 |
| | |
| safflower oil | 2 |
| white pigment | 60 |
| melamine resin (a) | 5 |
| | |
| co-drier (b) | 1 |

| | |
|---|---|
| (a) Cymel™ 1130 from Cytec Industries | |
| (b) cerium octoate | |

The inks thus obtained were applied onto pre-coated tin sheet using an IGT Printability tester AIC2. The inks were dried at 150°C for 10 min. After the initial drying stage the surface hardness of the ink layers was determined by evaluating the tackiness. The results are given in Table 4.

**Table 4**

| tin printing ink with alkyd of | Surface condition |
|---|---|
| Example 1 | completely dry |
| C-1 | onset of drying |
| C-2 | sticky surface |
| C-3 | not dry |

Because of the lack of surface drying, the printing ink prepared with the alkyd binders of C-2 and C-3 cannot be used under industrial conditions.
After initial drying the ink samples were heated at 205°C for 10 min in order to simulate the multiple passes through the oven in actual tin printing applications.

The yellowing of the white inks was measured using a Colorquest d8 Spherical spectrophotometer according to the method described in CIEL*a*b* (observer 10°, illuminant D65).
The yellowing is expressed as DE, being the total color difference between a standard and the measured object.
The results are given in Table 5.

**Table 5**

| Example | 1 | C-1 | C-2 | C-3 |
|---|---|---|---|---|
| DE* | 1.08 | 1.54 | 1.4 | 0.97 |

This table makes it clear that the tin printing ink prepared with the alkyd resin of Example 1 gives less yellowing than the inks prepared with the alkyd resins of C-1 and C-2, contrary to the expectation that an alkyd resin based on completely saturated fatty acids would show less yellowing than an alkyd resin with unsaturated (double) bonds in the fatty acid moiety. Only the tin printing ink prepared with the alkyd resin of C-3 shows minor yellowing, but this resin lacks the surface drying properties required for a tin printing ink.

In order to assess the performance in relation to a standard alkyd resin used in these applications, optimized tin printing inks were prepared from the alkyd resins of Example 1 and Comparative Example C-1. These tin printing inks have an overall composition as given in Table 3, but small modifications were made in the dilution in order to obtain printable ink compositions from both alkyd resins. The compositions obtained had the following ink characteristics (Table 6):

**Table 6.**

| ink prepared with alkyd of | Example 1 | C-1 |
|---|---|---|
| viscosity (Poises) | 958 | 362 |
| yield stress (dynes.cm⁻²) | 13000 | 8000 |
| tack (tack units) (a) | 158 | 124 |
| flow test (cm) | 2 | 6 |

The inks obtained were printed onto pre-coated tin plate. After application of the ink a transparent varnish was applied. The performance of both tin printing inks was determined. The results are given in Table 7.

**Table 7.**

| ink prepared with alkyd of | Example 1 | C-1 |
|---|---|---|
| wet in wet application varnish | good | good |
| resistance against sterilization (boiling water) | good | good, |
| scratch resistance and through drying | good | good |

The yellowing (DE) was measured after stoving from 1 to 10 min at 205°C using an ACS color computer (Table 8). In Table 8 the results for yellowing are given under three different lighting conditions, i.e., daylight 65(1), evening light (2) and TL84 light (3).

**Table 8**

| ink prepared with alkyd resin from | | C-1 | Example 1 |
|---|---|---|---|
| 1 min at 205°C (DE) | (1) | 0.63 | 0.63 |
| | (2) | 0.62 | 0.64 |
| | (3) | 0.64 | 0.68 |
| 10 min at 205°C (DE) | (1) | 1.83 | 0.93 |
| | (2) | 1.84 | 0.93 |
| | (3) | 2.11 | 1.08 |

It can be concluded that the alkyd resin of the composition prepared with the alkyd resin from Example 1 shows a significantly lower yellowing value and still has all of the required properties for a tin printing ink.

## Claims

1. A printing ink composition comprising 40-90 wt.% of an alkyd resin which is obtainable by reacting a mixture comprising 25 to 90 wt.% fatty acid, 3 to 40 wt.% polyhydric alcohol, and 3-35 wt.% polyfunctional carboxylic acid or the anhydride thereof, **characterized in that** the fatty acid is a mixture of saturated and unsaturated fatty acids, the ratio of saturated fatty acid : unsaturated fatty acid being 1.5:1 to 5 : 1.

2. The printing ink composition of claim 1 wherein the alkyd resin is obtainable from a mixture of fatty acids wherein > 50 wt.% of the saturated fatty acid is a branched fatty acid.

3. The printing ink composition of claim 2 wherein the alkyd resin is obtainable from a mixture of fatty acids wherein> 90 wt.% of the saturated fatty acid is a branched fatty acid.

4. The printing ink composition of any one of claims 1-3 further comprising an amino-aldehyde resin binder.

5. The printing ink composition of claim 4 wherein the amino-aldehyde resin binder is a melamine-formaldehyde resin binder.

6. Use of the composition of any one of claims 1-5 for making a printing ink.
